# EUROPÄISCHE PATENTANMELDUNG

(11) **EP 0 678 649 A1**
(43) Veröffentlichungstag der Anmeldung: **25.10.1995**
(21) Anmeldenummer: 94106250.7
(22) Anmeldetag: 21.04.1994
(51) Int. Cl.: E06B 9/70, E06B 9/82, E06B 9/58

(54) **Rolltor mit Steuervorrichtung**

(30) Priorität: 21.04.1993 DE 4313062
(71) Anmelder: EFAFLEX Transport- und Lagertechnik GmbH, D-84079 Bruckberg (DE)
(72) Erfinder: Rieder, Helmut, D-85368 Moosburg (DE)
(74) Vertreter: KUHNEN, WACKER & PARTNER

(57) **Zusammenfassung**

2.1 Bei den bekannten Rolltoren mit einem flexiblen Behang und eines unteren, in Schließstellung des Rolltores dicht an einer Bodenfläche anliegenden Abschlußrand besteht der Nachteil, daß im Störungsfall der Automatikbetrieb unterbrochen und ein im wesentlichen von Hand vorzunehmender Neustart eingerichtet werden muß.

2.2 Diesen Nachteil vermeidet das erfindungsgemäße Rolltor dadurch, daß eine Steuervorrichtung mit einem Sensor (14) vorgesehen ist, der eine Abweichung des Torblattes im Bezug auf die Führungsschienen (8, 9) des Rolltores erfaßt. Gleichzeitig dient der Sensor (14) zum automatischen Abgleich der Rolltorposition nach einem Neustart des Rolltores nach einer Störung.

2.3 Derartige Rolltore werden vorzugsweise bei Industriegebäuden zum Abschluß von Hallendurchgängen oder Außentoröffnungen verwendet.

## Beschreibung

Die Erfindung bezieht sich auf ein Rolltor mit einem flexiblen Behang aus nichtmetallischem Material, der mit einem unteren, in Schließstellung des Rolltores dicht an einer Bodenfläche anliegenden Abschlußrand versehen ist.

Derartige Rolltore werden vorzugsweise bei Industriegebäuden zum Abschluß von Hallendurchgängen und Außentoröffnungen verwendet. Der Behang besteht aus flexiblen, meist auch durchscheinendem Material, um einen etwaigen Gegenverkehr wahrnehmen zu können, und wird durch eine oberhalb der Toröffnung angeordnete Walze auf- und abgewickelt. Der untere Abschlußrand des Behanges weist ein Schild als Gewicht auf, welches aus einem Material hergestellt ist, das im Vergleich zum Behang erhöhte Biegesteifigkeit besitzt. Das Schild weist an den Seiten Führungselemente auf, die jeweils in einer seitlich am Rolltor angebrachten Führungsschiene geführt sind.

Bei ausreichend hoher Festigkeit gegen Windangriff und guter Schnellaufeigenschaften eignet sich ein derartiges Rolltor insbesondere für ein häufiges, rasches Öffnen und Schließen, das im allgemeinen motorisch betätigt wird, um den Durchlaß von Personen oder Fahrzeugen möglichst wenig zu behindern. Neben mechanisch per Handzügen betätigbaren Rolltoren sind automatisch arbeitende Rolltore bekannt, die beispielsweise durch Überfahren einer im Bodenbereich vor dem Rolltor untergebrachten Induktionsschleife betätigt werden.

Bei den bekannten Rolltoren wird es als nachteilig angesehen, daß - sofern überhaupt eine Störung erkannt werden kann - nach einer Störung das Rolltor per Hand in den ordnungsgemäßen Zustand versetzt werden muß, was häufig mit einer Unterbrechung des Betriebs- und Funktionsablaufes verbunden ist. So ist beispielsweise nach einem Netzausfall, oder nach einer Notlüftung, bei der das Rolltor per Hand in die Offenstellung gefahren wird, sowie nach Reparaturarbeiten am Rolltor ein manuell durchzuführender Neustart verbunden mit einer Synchronisierung, einem Abgleich und einer Einstellung des Rolltores notwendig.

Des weiteren sind Rolltore bekannt, die derart ausgebildet sind, daß ein Zusammenstoß eines Fahrzeuges wie beispielsweise einem Gabelstapler mit dem Torbehang nicht unbedingt zur Funktionsuntüchtigkeit des Rolltores führt, und somit Stillstandzeiten und Reparaturkosten vermieden werden. Bei diesen Rolltoren ist das Führungselement im Schild derart ausgebildet, daß es lose in den seitlich am Rolltor angebrachten Führungsschienen zu führen ist, so daß das Schild bei einer Krafteinwirkung quer zur Torblattebene aus der Führungsschiene springt. Jedoch wird auch bei solchen Rolltoren im Störfall der Automatikbetrieb unterbrochen, so daß ein im wesentlichen von Hand vorzunehmender Neustart eingerichtet werden muß.

Es ist daher Aufgabe der vorliegenden Erfindung, ein Rolltor der eingangs beschriebenen Art zur Verfügung zu stellen, bei dem bei Störungsfällen der Automatikbetrieb im wesentlichen nicht unterbrochen werden muß.

Diese Aufgabe wird durch ein Rolltor mit den Merkmalen gemäß Anspruch 1 gelöst.

Der Erfindung liegt die Erkenntnis zugrunde, erstmals ein "intelligentes" Rolltor zur Verfügung zu stellen, welches Störungen selbsttätig erkennt und verarbeitet.

Erfindungsgemäß ist eine Steuervorrichtung zur Steuerung des Rolltores vorgesehen, die mit einem Sensor gekoppelt ist, der an dem Torblatt (d. h. am Behang oder am Schild) angebracht ist und zusammen mit dem Behang relativ zu den Führungsschienen verfahren wird. Auf diese Weise kann die Position des Sensors (und damit des Schildes bzw. des Behanges) in Bezug auf die Führungsschiene erfaßt und zur Einleitung von Steuermechanismen ausgewertet werden. Der Sensor weist drei Hauptfunktionen auf, nämlich die Erfassung einer Abweichung der Position des Schildes bzw. des Behanges von der Soll-Lage, eine automatische Synchronisation bzw. ein automatischer Abgleich nach einem Neustart des Rolltores nach einer Störung, und generell die Überwachung des ordnungsgemäßen Betriebszustandes des Rolltores. Die mehrfunktionale Verwendung des Sensors ergibt sich erfindungsgemäß dadurch, daß der Sensor nicht ortsfest, sondern in vorteilhafter Weise am Torblatt angebracht ist und mit diesem verfahrbar ist. Die sich auf diese Weise ergebende Möglichkeit einer Erfassung von relativen Positionsänderungen können für unterschiedliche Steuerungen verwendet werden.

Bei einer vorteilhaften Ausführungsform der Erfindung stellt der Sensor gemäß Anspruch 2 einen am seitlichen Randbereich des Schildes angebrachten Induktionssensor dar, der die Führungskanten der Führungsschienen abtastet. Auf diese Weise sind kleinste Abweichungen des Sollabstandes zwischen der Führungsschiene und dem Sensor, der berühungslos über die Führungskanten geführt ist, bestimmbar.

Gemäß Anspruch 3 wird vorteilhaft die tatsächliche Höhe des Rolltores durch einen in der Steuervorrichtung vorgesehenen Zähler errechnet und mit dem vom Sensor abgegebenen Signal verglichen. Der Zähler ist vorzugsweise mit zwei induktiven Näherungsschaltern gekoppelt, die im Abstand von einem an der Wickelachse des Rolltores angebrachten Zahnrad angeordnet sind und in Abhängigkeit von Drehrichtung und Höhe des Rolltores definierte Impulswerte abgeben. Beispielsweise gibt der Zähler bei Torhöhe Null (geschlossenes Rolltor) einen Nullwert ab, während er bei vollständig offenem Rolltor in Abhängigkeit der gesamten Rolltorhöhe eine bestimmte Anzahl von Impulsen abgibt. Durch Vergleich des Zählerstandes mit dem vom Sensor abgegebenen Signal kann ermittelt werden, ob sich der Torbehang ordnungsgemäß zwischen den Endlagen des geöffneten bzw. geschlossenen Rolltores befindet. Falls dies beispielsweise nach einer Störung nicht zutrifft, kann nach einem Neustart des Rolltores ein automatischer Abgleich dadurch eingeleitet werden, daß der Zählerstand selbsttätig synchronisiert wird. Hierzu wird der Sensor gemäß Anspruch 4 an eine in einer definierten Höhe der Toröffnung angebrachten Marke gefahren, und der zu dieser Torhöhe gehörende Zählerstand abgeglichen. Die Marke kann hierbei einfach das obere Ende der Führungsschiene darstellen, oder eine an einer definierten Stelle der Führungsschiene, etwa am unteren Bereich angebrachte Vertiefung sein, die vom Sensor erfaßt wird.

Bei einer besonders vorteilhaften Ausgestaltung der Erfindung gemäß Anspruch 5 ist das Führungselement des Schildes derart lose in der Führungsschiene geführt, daß das Schild bei einer Krafteinwirkung auf das Torblatt aus der Toröffnungsebene ausgelenkt wird, wobei Sensor und Steuervorrichtung eine Abweichung der Position des Schildes von der Toröffnungsebene erfassen. In diesem Fall können in Abhängigkeit der relativen Auslenkung des Schildes selbsttätig Maßnahmen eingeleitet werden, um die automatische Funktionsfähigkeit des Rolltores zu erhalten. Insbesondere kann gemäß Anspruch 6, falls die Abweichung während einer normalen Aufoder Abwärtsbewegung des Behanges eine vorbestimmte Zeitdauer überschreitet, ein Herausspringen des Rolltorblattes aus der Führungsschiene infolge eines Zusammenstoßes mit einem Fahrzeug erkannt (Crash-Erkennung) und als Reaktion hierauf eine Störroutine ausgelöst werden. Ein empirisch bestimmter Wert einer solchen Zeitdauer beträgt gemäß Anspruch 7 beispielsweise 50 ms.

Auf vorteilhafte Weise kann gemäß Anspruch 8 nach Auslösung der Störroutine nach einem Crash der Rolltorbehang selbsttätig eingependelt werden. Hierzu kann das Rolltor vorzugsweise mit langsamer Geschwindigkeit geöffnet werden und durch Anfahren der Marke eine automatische Synchronisation des Zählerstandes (Abgleich zur tatsächlichen Torhöhe) vorgenommen werden. Von Vorteil kann auf diese Weise gewährleistet werden, daß selbst bei einem solchen Zusammenstoß mit einem Fahrzeug, bei dem der Behang teilweise oder vollständig aus den Führungsschienen ausgelenkt wird, ein automatisches Wiedereinfädeln und Synchronisieren des Rolltores erfolgen kann, und somit Stillstandzeiten und Reparaturkosten vermieden werden. Die Steuervorrichtung kann des weiteren derart programmiert sein, daß die Anzahl von Störungsfällen erfaßt wird und bei Überschreiten eines bestimmten Limits das Rolltor im geöffneten Zustand stehenbleibt und eine Wartung erfordert, bevor ein weiterer Automatikbetrieb freigegeben wird. Zusätzlich kann vorgegeben werden, daß in einem solchen Fall ein handbetriebenes Schließen des Rolltores nach wie vor möglich bleibt, das Rolltor jedoch bei dem Versuch, es in den Automatikbetrieb zu schalten und das Rolltor erneut zu öffnen, stehen bleibt.

Bei der weiteren Ausgestaltung der Erfindung kann gemäß Anspruch 9 die Öffnungs- bzw. Schließgeschwindigkeit des Behanges nach Auslösung der Störroutine durch die Steuervorrichtung in Abhängigkeit zur Torhöhe im Zeitpunkt der Störung und/oder in Abhängigkeit des nach Behebung der Störung erfaßten Sensorsignales gesteuert werden. Beispielsweise kann das Rolltor unmittelbar nach Eintritt der Störung mit langsamer Geschwindigkeit geöffnet werden, während das Rolltor mit der möglichen Geschwindigkeit (positionsabhängig) von beispielsweise 0,75 m/s (Schließen) und 1,5 m/s (Öffnen) bewegt werden kann, falls das Sensorsignal bereits länger als eine bestimmte Zeit (beispielsweise 200 ms) durch das Abtasten der Führungsschienen erkennbar ist.

Weitere Einzelheiten, Aspekte und Vorteile der vorliegenden Erfindung ergeben sich aus der nachfolgenden Beschreibung unter Bezugnahme auf die Zeichnung.

Es zeigt:
- Fig. 1: eine schematische Vorderansicht eines erfindungsgemäßen Rolltores, wobei die linke Figurenhälfte das Rolltor in geschlossenem Zustand, und die rechte Figurenhälfte das Rolltor in geöffnetem Zustand zeigt;
- Fig. 2: eine vergrößerte Seitenschnittansicht des Rolltores gemäß der Schnittlinie II - II aus Fig. 1;
- Fig. 3: eine vergrößerte Schnittansicht in Draufsicht gemäß der Schnittlinie III - III aus Fig. 1;
- Fig. 4: eine vergrößerte Schnittansicht in Draufsicht gemäß der Schnittlinie IV - IV aus Fig. 1;
- Fig. 5: eine vergrößerte Vorderansicht der Einzelheit X aus Fig. 1; und
- Fig. 6: eine vergrößerte Seitenansicht der Einzelheit X aus Fig. 1.

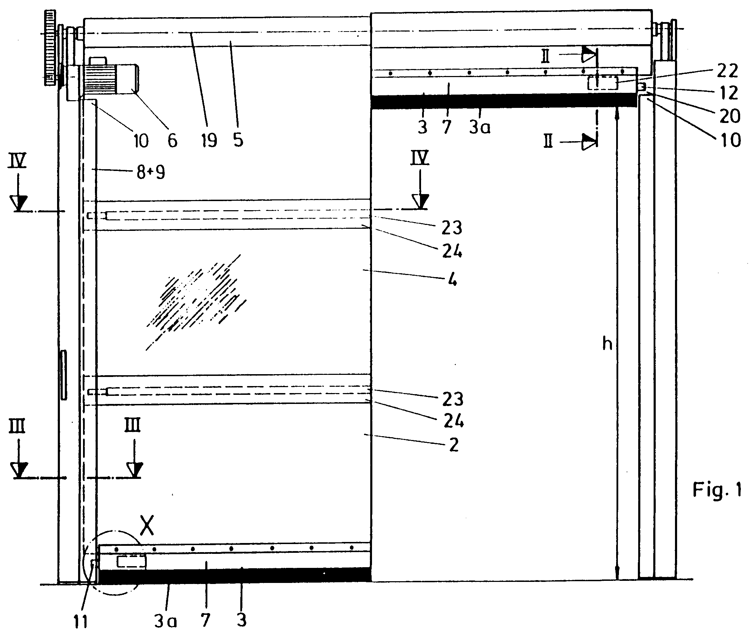

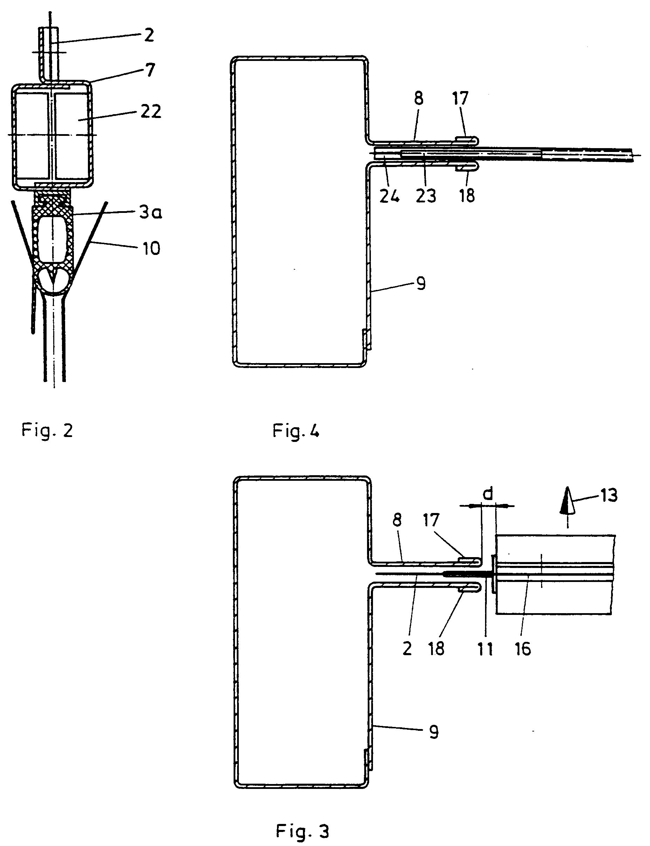

Die Fig. 1 bis 6 zeigen in verschiedenen Ansichten ein erfindungsgemäßes Rolltor 1 mit einem flexiblen Behang 2 aus nichtmetallischem Material, der mit einem unteren, in Schließstellung des Rolltores 1 dicht an einer Bodenfläche anliegenden Abschlußrand 3 versehen ist. Der Behang 2 ist beispielsweise aus Weich-PVC oder Gewebe-PVC hergestellt und besitzt einen Abschnitt 4 aus durchscheinendem Material. Oberhalb der Toröffnung ist eine Walze 5 angeordnet, auf der der Behang 2 auf- und abgewickelt wird. Ein Elektromotor 6 dient zum Antrieb der Walze 5. Der untere Abschlußrand 3 des Behanges 2 weist ein Schild 7 auf, welches aus einem Material hergestellt ist, das im Vergleich zum Behang 2 erhöhte Biegesteifigkeit und Bruchfestigkeit besitzt, beispielsweise aus einem Polycarbonat, insbesondere Makrolon. Unterhalb des Schildes 7 ist eine Dichtlippe 3a aus Gummi befestigt, die im geschlossenen Zustand des Rolltores eine ausreichende Dichtheit gegen Windzug sicherstellt. An jeder Seite der Toröffnung sind Führungsschienen 8, 9 angebracht, die am oberen Ende 10 trichterförmig erweitert sind. In den Fig. 3 und sind lediglich die Führungsschienen 8 und 9 der gemäß Fig. 1 linken Seite des Rolltores dargestellt; es versteht sich von selbst, daß die rechte Seite analog ausgebildete Führungsschienen besitzt. In den Führungsschienen 8, 9 ist der seitliche Randbereich des Behanges 2, sowie ein am Schild 7 vorgesehenes Führungselement 11, 12 derart lose geführt, daß das Schild 7 bzw. der Behang 2 bei einer Krafteinwirkung auf den Behang aus der Torblattebene in Richtung des Pfeiles 13 (siehe Fig. 3) ausgelenkt, und erst bei übermäßiger Krafteinwirkung aus den Führungsschienen gedrückt wird.

Bezüglich weiterer Einzelheiten, Merkmale und Zweckmäßigkeiten des Rolltores 1, des Behanges 2, des Abschlußrandes 3 und insbesondere des Schildes 7 wird ausdrücklich auf die parallele deutsche Patentanmeldung desselben Anmelders vom gleichen Tage mit der Bezeichnung "Rolltor mit flexiblem Behang" gemäß Anwaltsaktenzeichen 11EF0169 verwiesen und vollinhaltlich Bezug genommen.

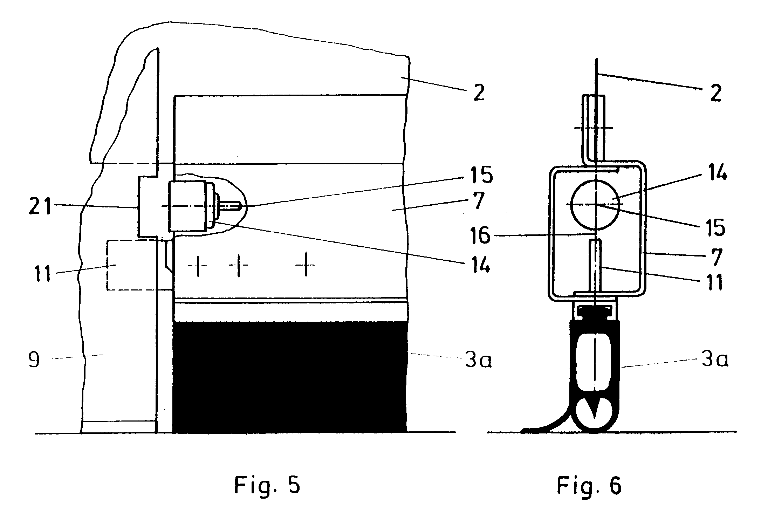

Gemäß Fig. 5 und 6 ist am in den Figuren linken seitlichen Randbereich des Schildes 7 oberhalb des Führungselementes 11 ein annähernd zylinderförmiger Sensor 14 angeordnet, dessen Zylinderachse 15 in der Torblattebene 16 liegt (Fig. 5). Der Sensor 14 ist somit mittig im Torblatt montiert und wird mit diesem bewegt. In Sollposition des Schildes 7 bzw. des Behanges 2 tastet der Sensor 14 die beiden Führungskanten 17 und 18 in einem Abstand d von etwa 4 bis 8 mm Entfernung ab (siehe auch Fig. 3). In Sollposition des Torblattes, bei der die Torblattebene 16 mit der Toröffnungsebene zusammenfällt, gibt der Sensor ein gleichförmiges Signal ab, dessen Absolutwert im wesentlichen vom Abstand d und von der Größe der dem Sensor 14 gegenüberliegenden Stirnflächen der metallischen Führungskanten 17 und 18 abhängt. Bei geringsten Abweichungen des Schildes 7 bzw. des Behanges 2 und damit der Zylinderachse 15 des Sensors 14 von der Toröffnungsebene ändert sich der Abstand d bzw. die Größe der dem Sensor gegenüberliegenden metallischen Stirnflächen der Führungskanten 17 und 18, und demgemäß ändert sich das vom Sensor ausgegebene Signal. Auf diese Weise ist eine empfindliche und genaue Erfassung der Abweichung der Torblattebene von der Toröffnungsebene möglich. Im dargestellten Ausführungsbeispiel ist lediglich ein Sensor 14 vorgesehen, und zwar auf der mechanisch kritischeren Seite des Motors. Zusätzlich kann auf der gegenüberliegenden Seite des Schildes 7 ein weiterer Sensor angebracht sein.

Der Sensor 14 stellt einen Induktionssensor dar, dessen Wirkungsweise an sich bekannt ist. Beispielsweise weist der Sensor einen magnetischen Kern mit einer Wicklung auf, die eine bestimmte Induktivität besitzt, und die einen Teil eines Schwingkreises bildet, dessen Eigenfrequenz von den magnetischen Randbedingungen abhängt, also von der Größe der Stirnflächen und dem Abstand d der Führungskanten 17 und 18.

Zur Auswertung der vom Sensor 14 ausgegebenen Signale ist dieser beispielsweise über ein Spiralkabel mit einer zum Rolltor ortsfest angebrachten, jedoch nicht näher dargestellten Steuervorrichtung verbunden, in der sämtliche für die elektrische Steuerung des Rolltores benötigten Schaltkreise zusammengefaßt sind. Die Steuervorrichtung arbeitet mit einer speicherprogrammierbaren Steuerung (SPS), dessen Wirkungsweise dem Fachmann an sich geläufig ist. Die Steuervorrichtung erhält des weiteren Signale von zwei induktiven Näherungsschaltern, die gleich oder ähnlich wie der Sensor 14 gebildet sind und mit einem gewissen Abstand voneinander in der Nähe eines (nicht näher dargestellten) Zahnrades angeordnet sind, das auf der Wickelachse 19 montiert ist und einen bestimmten Zahnsatz (Anzahl von Zähnen bzw. Lücken) besitzt. Die Näherungsschalter sind mit einem Zähler verbunden, der in Abhängigkeit von Drehrichtung und Stellung des Zahnrades, und somit in Abhängigkeit der tatsächlichen Torhöhe h Zählimpulse an die Steuervorrichtung abgibt. Beispielsweise wird die Steuervorrichtung bei der Erstinbetriebnahme des Rolltores derart programmiert, daß der Zähler beim geschlossenen Tor (h = 0) 0 Zählimpulse, und bei vollständig geöffnetem Rolltor (h = maximal) den Maximalwert von 400 bis 600 Zählimpulsen in Abhängigkeit der jeweiligen Torgröße abgibt. Die Anzahl der Zählimpulse gibt somit die tatsächliche Höhe des Rolltores wieder. Die Programmierung der Steuervorrichtung bei der Erstinbetriebnahme erfolgt durch einen Monteur dadurch, daß das Rolltor mit Handbetrieb auf die Bodenkante angefahren, der Zähler auf Nullposition gesetzt, und anschließend mit Handbetrieb auf die vollständig geöffnete Torposition gefahren, und wiederum der Zähler gesetzt wird, so daß in der Steuervorrichtung permanent der Maximalwert der Zählimpulse gespeichert wird. Das Rolltor ist nun für den Automatikbetrieb programmiert, ohne daß weitere Einstellarbeiten erforderlich sind.

Nach einer Störung wie beispielsweise einem Spannungsausfall, einer Notlüftung oder dergleichen ist das Rolltor mangels Vorliegen einer definierten Torposition erneut zu synchronisieren. Bei dem erfindungsgemäßen Rolltor kann dies ohne den Einsatz eines Monteurs oder einer Bedienungsperson automatisch dadurch durchgeführt werden, daß das Torblatt selbständig mit langsamer Geschwindigkeit (etwa 0,25 m/s) solange nach oben gefahren wird, bis der Sensor 14 die obere Endposition (eine obere "Marke" 20 ist zur Vereinfachung der Darstellung auf der rechten, geöffneten Figurenhälfte in Fig. 1 dargestellt) der Führungsschiene 9 erkennt, der Zähler auf den entsprechenden Zählerstand gesetzt wird, und anschließend das Torblatt vollständig nach unten zur Bodenkante gefahren wird, der Nullpunkt des Zählerstandes durch Erfassen einer als Vertiefung in der Führungsschiene 8 gebildeten unteren Marke 21 (siehe Fig. 4) durch den Sensor 14 ermittelt wird. Nach diesem Abgleich des Zählerstandes mit den beiden Endpositionen des Rolltores ist die automatische Synchronisierung des Zählers vervollständigt, so daß das Rolltor wieder mit normaler Geschwindigkeit betrieben werden kann.

Eine ähnliche Routine wird automatisch nach einer Störung infolge eines Zusammenstoßes des Torblattes mit einem Fahrzeug durchgeführt, bei dem das Torblatt aus der Toröffnungsebene ausgelenkt oder sogar aus den Führungsschienen heraus gedrückt ("Crash") wird. Befindet sich das Torblatt im Crash-Erkennungsbereich, d. h. der Zählerstand liegt zwischen "Tor-zu +3" und "Tor-auf -10", und wird während einer Auf- oder Abwärtsbewegung des Rolltores im Automatikbetrieb das Sensorsignal für mehr als eine bestimmte Zeitdauer von beispielsweise 50 ms unterbrochen, so leitet die Steuervorrichtung die Störroutine ein. Dies bedeutet, daß das erfindungsgemäße Rolltor auch nach einem Crash mit einem Fahrzeug automatisch eingependelt und die Position mit dem remanenten Zählerstand durch Anfahren der Endpositionen abgeglichen wird. Falls nach Beendigung der Störroutine das Sensorsignal bereits länger als 200 ms durch das Abtasten der Führungsschienen erkennbar ist, kann das Rolltor mit der an sich möglichen Geschwindigkeit (positionsabhängig) bewegt werden. Des weiteren ist die Steuervorrichtung derart programmiert, daß das Tor im geöffneten Zustand stehen bleibt, und sich im Automatikbetrieb nicht mehr schließen läßt, wenn das Tor beispielsweise bereits zum fünften Mal gecrasht wurde. In diesem Fall ist das Schließen des Tores im Handbetrieb möglich; wird jedoch in Automatikbetrieb geschaltet und das Tor erneut geöffnet, so bleibt es stehen.

## Patentansprüche

1. Rolltor mit einem flexiblen Behang (2) aus nichtmetallischem Material, der mit einem unteren, in Schließstellung des Rolltores (1) dicht an einer Bodenfläche anliegenden Abschlußrand (3) versehen ist, wobei der Abschlußrand (3) ein Schild (7) mit einem Führungselement (11, 12) aufweist, das in einer seitlich am Rolltor (1) angebrachten Führungsschiene (8, 9) geführt ist, daß das Schild (7) bei einer Krafteinwirkung auf das Torblatt aus der Toröffnungsebene ausgelenkt wird,
dadurch **gekennzeichnet**, daß
eine Steuervorrichtung mit einem am Torblatt angebrachten Sensor (14) vorgesehen ist, die die Position des Sensors (14) in Bezug auf die Führungsschiene (8, 9) erfaßt.

2. Rolltor nach Anspruch 1, dadurch gekennzeichnet, daß der Sensor (14) ein am seitlichen Rand des Schildes (7) angebrachter Induktionssensor ist, der die Führungskanten (17, 18) der Führungsschienen (8, 9) abtastet.

3. Rolltor nach Anspruch 1 oder 2, dadurch gekennzeichnet, daß die Steuervorrichtung einen Zähler aufweist, dessen Zählerstand zur tatsächlichen Höhe (h) des Rolltores (1) korreliert und mit dem vom Sensor (14) abgegebenen Signal verglichen wird.

4. Rolltor nach Anspruch 3, dadurch gekennzeichnet, daß der Zählerstand selbstätig dadurch synchronisiert wird, daß der Sensor (14) eine vorbestimmte Marke (20, 21), die an einer definierten Höhe der Toröffnung angebracht ist, erfaßt.

5. Rolltor nach einem der vorhergehenden Ansprüche, dadurch gekennzeichnet, daß das Führungselement (11, 12) derart lose in der Führungsschiene (8, 9) geführt ist, daß das Schild (7) bei einer Krafteinwirkung auf das Torblatt aus der Toröffnungsebene ausgelenkt wird, und die Steuervorrichtung eine Abweichung der Position des Sensors (14) von der Toröffnungsebene erfaßt.

6. Rolltor nach einem der vorhergehenden Ansprüche, dadurch gekennzeichnet, daß die Steuervorrichtung im Falle einer Anzeige einer Abweichung der Position des Sensors (14) von der Toröffnungsebene für eine vorbestimmte Zeitdauer während einer Auf-/Abwärtsbewegung des Behanges (2) eine Störung erkennt und als Reaktion hierauf eine Störroutine auslöst.

7. Rolltor nach Anspruch 6, dadurch gekennzeichnet, daß die vorbestimmte Zeitdauer etwa 50 ms beträgt.

8. Rolltor nach Anspruch 6 oder 7, dadurch gekennzeichnet, daß nach Auslösung der Störroutine das Schild (7) und/oder der Behang (2) selbstätig eingependelt wird und eine automatische Synchronisation des Zählerstandes vorgenommen wird.

9. Rolltor nach einem der Ansprüche 6 bis 8, dadurch gekennzeichnet, daß die Öffnungs-/Schließgeschwindigkeit des Behanges (2) nach Auslösung der Störroutine durch die Steuervorrichtung in Abhängigkeit zur Torhöhe im Zeitpunkt der Störung und/oder in Abhängigkeit des nach Behebung der Störung erfaßten Sensorsignales gesteuert wird.
